# EUROPÄISCHE PATENTSCHRIFT

(11) **EP 1 776 835 B1**
(45) Veröffentlichungstag und Bekanntmachung des Hinweises auf die Patenterteilung: **14.08.2013**
(21) Anmeldenummer: 05749100.3
(22) Anmeldetag: 14.06.2005
(51) Int. Cl.: H04N 7/18, H04N 5/073, H04N 5/232

(54) **BILDAUFNAHMESYSTEM**
IMAGE RECORDING SYSTEM
SYSTEME DE PRISE DE VUE

(30) Priorität: 07.08.2004 DE 102004038495
(43) Veröffentlichungstag der Anmeldung: 25.04.2007
(73) Patentinhaber: Robert Bosch GmbH, 70442 Stuttgart (DE)
(72) Erfinder: STUMBER, Tobias, 70195 Stuttgart (DE); FRITZ, Steffen, 75449 Wurmberg (DE)
(86) Internationale Anmeldenummer: PCT/EP2005/052729
(87) Internationale Veröffentlichungsnummer: WO 2006/015895

(56) Entgegenhaltungen:
- EP-A- 0 515 064
- EP-A- 1 284 578
- US-A- 5 801 770

## Beschreibung

### Stand der Technik

Die Erfindung betrifft ein Bildaufnahmesystem nach dem Oberbegriff des Anspruchs 1. Das Bildaufnahmesystem soll bevorzugt in Kraftfahrzeugen eingesetzt werden. Bildaufnahmesysteme für diese Einsatzart müssen besonders robust und kostengünstig ausgelegt werden. Bei einem Bildaufnahmesystem, das eine Kamera mit einer digitalen Schnittstelle umfasst, werden die von der Kamera gewonnenen Bilddaten meistens über eine schnelle serielle Verbindung an die Empfangseinrichtung weitergeleitet ("Downlik"), wenn diese von der Kamera räumlich entfernt ist. Als Empfangseinrichtung kommt beispielsweise ein Steuergerät in Betracht, das diese Bilddaten weiterverarbeitet oder von den Bilddaten gesteuert wird. Für eine Kommunikation zwischen der Empfangseinrichtung und der Kamera ist auch eine Übertragung von Daten in Richtung der Kamera ("Uplink") notwendig. Im Vergleich zu der Datenübertragung zwischen der Kamera und der Empfangseinrichtung ist dabei die erforderliche Bandbreite sehr gering, da im wesentlichen nur Steuersignale und keine Bildinformationen übertragen werden müssen. Für die Realisierung derartiger bidirektionaler Datenverbindungen sind derzeit unidirektionale LVDS-Verbindungen (LVDS = Low Voltage Differential Signaling) mit unterschiedlichen Bandbreiten oder so genannte high-speed Bussysteme (wie beispielsweise FireWire, IEEE1394, USB 2.0) gebräuchlich. Nachteilig bei diesen erwähnten Bussystemen ist, dass sie keine direkte Taktinformation enthalten. Sobald eine Taktinformation erforderlich ist, muss der Takt über eine Taktrückgewinnung generiert werden. Dafür sind aber zusätzliche Schaltmittel erforderlich, die zu einer Verteuerung des Bildaufnahmesystems beitragen.

### Vorteile der Erfindung

Die Erfindung mit den Merkmalen des Anspruchs 1 ermöglicht eine preisgünstige bidirektionale Kommunikation zwischen einer Kamera und einer Empfangseinrichtung eines Bildaufnahmesystems, da nur vergleichsweise geringe Hard- und Software Ressourcen erforderlich sind. Dabei gilt es zwischen logischen Ressourcen (groß bei Bussystemen) und Hardware-Ressourcen wie Kabeladern und Steckerpins (groß bei zwei unidirektionalen LVDS-Verbindungen) abzuwägen. Die Erfindung ermöglicht dabei nicht nur eine Steuerung der Kamera, sondern eine genaue Synchronisierung der Datenverbindung zwischen der Kamera und der Empfangseinrichtung, die beispielsweise bei einem Bildaufnahmesystem mit Stereokameras von großer Bedeutung ist. In der Kamera selbst sind dazu möglichst wenige zusätzliche Bauelemente erforderlich, da sie möglichst preisgünstig herstellbar sein muss.

Die Erfindung geht von der Erkenntnis aus, dass für die Steuerung der Kamera des Bildaufnahmesystems ("Uplink") nur ein einziges Adernpaar erforderlich ist. Auf diesem Adernpaar wird ein differentielles LVDS-Signal über eine Pulsweitenmodulation (PWM) derart codiert, dass Daten- und Taktsignale gleichzeitig übertragbar sind. Für die Datenverbindung zwischen Kamera und Empfangseinrichtung in Richtung "Downlink" können dagegen mehrere Adernpaare mit getrenntem Taktsignal verwendet werden, um der erforderlichen hohen Bandbreite Rechnung zu tragen. Ein Vorteil der eingesetzten Pulsweitenmodulation ist, dass alle ansteigenden Flanken des Signals äquidistant bleiben und daher eine Takterzeugung in der Kamera mittels einer PLL (Phase-Lock-Loop) oder DLL (Digital-Lock-Loop)- Schaltung ermöglicht wird. Dadurch kann ein sonst erforderlicher Quarzgenerator für die Takterzeugung entfallen. Weiterhin ist so auf einfache Weise ein synchroner Betrieb von Kamera und Empfangseinrichtung erreichbar, da das Taktsignal direkt aus dem in der Empfangseinrichtung erzeugten Uplink-Signal abgeleitet wird. Weiterhin vorteilhaft kann eine Stereokamera mit Oszillator mit Hilfe des aus dem Uplink-Signal abgeleiteten Taktsignals synchronisiert werden. So kann beispielsweise das Taktsignal dazu benutzt werden, das Auslesen einzelner Zeilen der von der Stereokamera aufgenommenen Bilder zu triggern.

### Zeichnung

Ausführungsbeispiele der Erfindung werden nachfolgend unter Bezug auf die Zeichnung näher erläutert. Dabei zeigt
Figur 1 ein Blockschaltbild eines Bildaufnahmesystems,
Figur 2 Signalverläufe eines PWM-codierlen Signals.

### Beschreibung der Ausführungsbeispiele

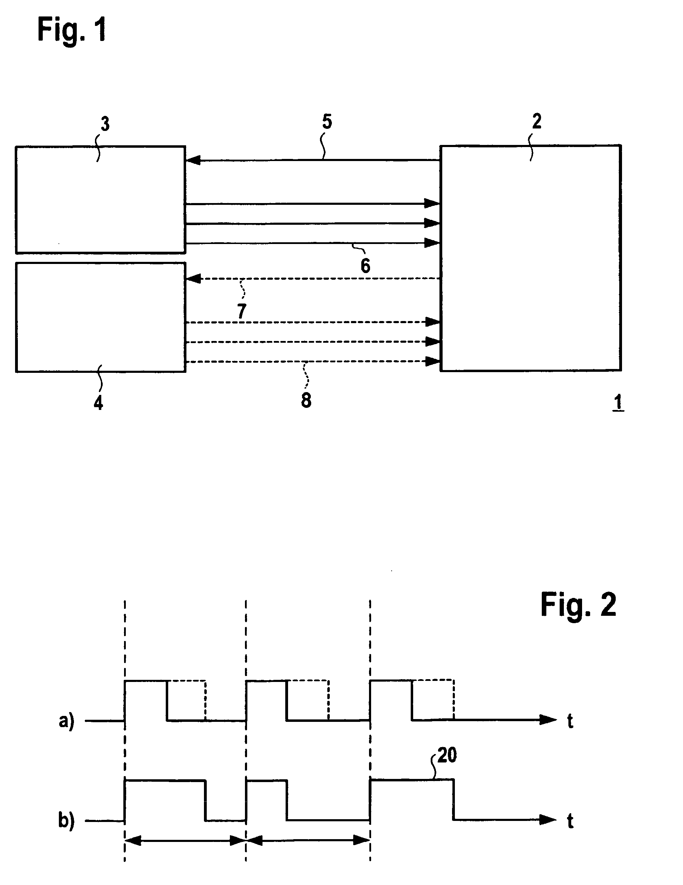

Figur 1 zeigt das Blockschaltbild eines Bildaufnahmesystems 1. Das Bildaufnahmesystem 1 umfasst wenigstens eine Kamera 3 und eine Empfangseinrichtung 2. Die wenigstens eine Kamera 3 und die Empfangseinrichtung 2 sind über Signalverbindungen 5, 6 miteinander verbunden. Die Signalverbindung 5 ist dabei eine so genannte "Up-Link"-Verbindung, die also eine Signalübertragung von der Empfangseinrichtung 2 zu der Kamera 3 ermöglicht. Die Signalverbindung 6 ist dabei eine so genannte "Down-Link"-Verbindung, die also eine Signalübertragung von der Kamera 3 zu der Empfangseinrichtung 2 ermöglicht. Im Folgenden wird die Funktionsweise des Bildaufnahmesystems gemäß Figur 1 beschrieben. Die Empfangseinrichtung 2 sendet über die Signalverbindung 5 ("Up-Link") ständig eine Folge von PWM- codierten (PWM = Pulsweitenmoduliert) digitalen Signalen, die gemäß Darstellung in Figur 2a aus logischen Nullen oder logischen Einsen bestehen. In der Darstellung in Figur 2a repräsentiert eine ausgezogene Linie eine logische Null, während die punktierte Linie eine logische Eins bedeutet. Ein Beispiel für eine übermittelte Signalfolge ist in Figur 2b dargestellt. Die dort dargestellte Kurve, die ein PWM-codiertes Signal als Funktion der Zeit t darstellt, repräsentiert die Signalfolge 1, 0, 1. Wie eingangs bereits erwähnt, zeichnet sich das PWM-Signal dadurch aus, dass alle ansteigenden Flanken des Signals äquidistant sind. Dies wird auch durch die Pfeile gleicher Länge angedeutet, die in Figur 2b dargestellt sind. Aus dem über die Signalverbindung 5 von der Empfangseinrichtung 2 zu der Kamera 3 übertragenen PWM-Signal (Figur 2b) lässt sich somit, unter Verwendung an sich bekannter PLL- oder DLL-Schaltungen, in der Kamera 3 ein Taktsignal zurückgewinnen, das synchron zu dem über die Signalverbindung 5 zu der Kamera 3 übertragenen Signal läuft. Mit diesem zurück gewonnenen Taktsignal wird das von der Empfangseinrichtung 2 zu der Kamera 3 übertragene PWM-Signal (Figur 2b) abgetastet. Durch diese Abtastung wird somit die von der Empfangseinrichtung zu der Kamera 3 übertragene Information decodiert, die zuvor in das PWM-Signal codiert wurde. Im Vergleich zu den eingangs erwähnten Alternativen, die eine größere Anzahl von Signalverbindungen zwischen der Empfangseinrichtung 2 und der Kamera 3 oder einen eigenen Taktoszillator in der Kamera 3 benötigen, zeichnet sich die erfinderische Lösung durch einen geringen Aufwand an Bauelementen aus und ist daher vergleichsweise preiswert herstellbar.

In einer vorteilhaften weiteren Ausgestaltung der Erfindung umfasst das Bildaufnahmesystem 1 eine Stereokamera (Kamera 3 und Kamera 4 in Figur 1). Die zusätzliche Kamera 4 ist mit punktiert gezeichneten Signalverbindungen 7, 8 mit der Empfangseinrichtung 2 verbunden. Bei der Signalverbindung 7 handelt es sich wiederum um eine "Up-Link"-Verbindung, auf der ebenfalls ein PWM-codiertes Signal übertragen wird. Die Signalverbindung 8 ("Down-Link") entspricht der Signalverbindung 6 und dient der Übertragung von Daten von der Kamera 4 zu der Empfangseinrichtung 2. Diese Ausführungsvariante bietet insbesondere den Vorteil, dass beide Kameras 3,4 keinen eigenen Taktoszillator benötigen und dennoch synchron laufen. Bei höherem Schaltungsaufwand bietet sich in weiteren Ausführungsvarianten hier noch die Möglichkeit, die Stereokamera 3,4 mit einem eigenen Taktoszillator auszustatten und nur die Synchronisation über ein aus dem PWM-codiertes Signal zurück gewonnenes Taktsignal zu ermöglichen.

## Patentansprüche

1. Bildaufnahmesystem (1) mit wenigstens einer Kamera (3,4), einer Empfangseinrichtung (2), sowie einer Signalverbindung (5,6,7,8) zwischen der wenigstens einen Kamera (3,4) und der Empfangseinrichtung (2), **dadurch gekennzeichnet, dass** die Empfangseinrichtung (2) Mittel für die Erzeugung eines PWM-codierten Signals (20) umfasst, dass das Bildaufnahmesystem (1) wenigstens eine Signalverbindung (5,7) für die Übertragung dieses PWM-codierten Signals (20) von der Empfangseinrichtung (2) zu der Kamera(3,4) umfasst, und dass in der Kamera (3,4) Mittel für die Decodierung des PWM-codierten Signals (20) und die Rückgewinnung eines Taktsignals aus dem PWM-codierten Signal vorgesehen sind.

2. Bildaufnahmesystem nach Anspruch 1, **dadurch gekennzeichnet, dass** das Bildaufnahmesystem (1) eine Stereokamera (Kamera 2, Kamera 3) umfasst, dass jede Kamera (2,3) mit der Empfangseinrichtung (2) über eine Signalverbindung (5,7) für die Übertragung eines PWM-codierlen Signals (20) verbunden sind, und dass jede Kamera (3,4) Mittel für die Decodierung des PWM-codierten Signals (20) und die Rückgewinnung eines Taktsignals aus dem PWM-codietten Signal (20) umfasst.

3. Bildaufnahmesystem nach einem der vorherigen Ansprüche, **dadurch gekennzeichnet, dass** wenigstens eine der Kameras (3,4) einen Oszillator umfasst und dass Mittel für die Synchronisation der Kameras vorgesehen sind, die ein Taktsignal aus einem von der Empfangseinrichtung (2) erzeugten PWM-codierten Signal zurück gewinnen.

4. Bildaufnahmesystem nach einem der vorhergehenden Ansprüche, **dadurch gekennzeichnet, dass** jede Kamera 3,4) mit einer breitbandigen Signalverbindung (6,8) mit der Empfangseinrichtung (2) verbunden ist.

5. Bildaufnahmesystem nach einem der vorhergehenden Ansprüche gekennzeichet durch seinen Einsatz in einem Kraftfahrzeug.

6. Verfahren für die Steuerung eines eine Empfangseinrichtung (2) und wenigstens eine Kamera (3,4) umfassenden Bildaufnahmesystems (1), **dadurch gekennzeichnet, dass** die Empfangseinrichtung (2) ein PWM-codiertes Signal (20) erzeugt, dass das Signal (20) der Kamera (3,4) über eine Signalverbindung 5,7) zugeleitet wird, und dass in der Kamera (3,4) ein Taktsignal aus dem PWM-codierten Signal (20) regeneriert wird.

7. Verfahren nach Anspruch 6, **dadurch gekennzeichnet, dass** das aus dem PWM-codierten Signal (20) regenerierte Taktsignal für die Steuerung der Kamera (3,4) und die Steuerung der Datenübertragung zwischen der Kamera (3,4) und der Empfangseinrichtung (2) benutzt wird.

8. Verfahren nach einem der vorhergehenden Ansprüche, **dadurch gekennzeichnet, dass** in wenigstens einer Kamera (3,4) ein Taktsignal erzeugt wird, und dass ein weiteres Taktsignal zu Synchronisationszwecken aus dem PWM-codierten Signal (20) gewonnen wird.

## Claims

1. Image recording system (1) having at least one camera (3, 4), a reception device (2) and a signal connection (5, 6, 7, 8) between the at least one camera (3, 4) and the reception device (2), **characterized in that** the reception device (2) comprises means for producing a PWM-encoded signal (20), **in that** the image recording system (1) comprises at least one signal connection (5, 7) for transmitting this PWM-encoded signal (20) from the reception device (2) to the camera (3, 4), and **in that** the camera (3, 4) contains means for decoding the PWM-encoded signal (20) and recovering a clock signal from the PWM-encoded signal.

2. Image recording system according to Claim 1, **characterized in that** the image recording system (1) comprises a stereo camera (camera 2, camera 3), **in that** each camera (2, 3) is connected to the reception device (2) via a signal connection (5, 7) for transmitting a PWM-encoded signal (20), and **in that** each camera (3, 4) comprises means for decoding the PWM-encoded signal (20) and recovering a clock signal from the PWM-encoded signal (20).

3. Image recording system according to either of the preceding claims, **characterized in that** at least one of the cameras (3, 4) comprises an oscillator and **in that** means for synchronizing the cameras are provided which recover a clock signal from a PWM-encoded signal that is produced by the reception device (2).

4. Image recording system according to one of the preceding claims, **characterized in that** each camera (3, 4) is connected to the reception device (2) by means of a wideband signal connection (6, 8).

5. Image recording system according to one of the preceding claims, **characterized by** the use thereof in a motor vehicle.

6. Method for controlling an image recording system (1) that comprises a reception device (2) and at least one camera (3, 4), **characterized in that** the reception device (2) produces a PWM-encoded signal (20), **in that** the signal (20) is supplied to the camera (3, 4) via a signal connection (5, 7), and **in that** a clock signal is regenerated from the PWM-encoded signal (20) in the camera (3, 4).

7. Method according to Claim 6, **characterized in that** the clock signal regenerated from the PWM-encoded signal (20) is used for controlling the camera (3, 4) and controlling the data transmission between the camera (3, 4) and the reception device (2).

8. Method according to one of the preceding claims, **characterized in that** a clock signal is produced in at least one camera (3, 4), and **in that** a further clock signal is obtained from the PWM-encoded signal (20) for synchronization purposes.

## Revendications

1. Système (1) d'enregistrement d'images qui présente au moins une caméra (3, 4), un dispositif de réception (2) ainsi qu'une liaison de signalisation (5, 6, 7, 8) entre la ou les caméras (3, 4) et le dispositif de réception (2), **caractérisé en ce que** le dispositif de réception (2) comporte des moyens permettant de former un signal (20) codé en PWM, **en ce que** le système (1) d'enregistrement d'images comporte au moins une liaison de signalisation (5, 7) permettant le transfert de ce signal (20) codé en PWM depuis le dispositif de réception (2) jusqu'à la caméra (3, 4) et **en ce que** des moyens de décodage du signal (20) codé en PWM et de récupération d'un signal d'horloge à partir du signal codé en PWM sont prévus dans la caméra (3, 4).

2. Système d'enregistrement d'images selon la revendication 1, **caractérisé en ce que** le système (1) d'enregistrement d'images comporte une caméra stéréo (caméra 2, caméra 3), **en ce que** chaque caméra (2, 3) est reliée au dispositif de réception (2) au moyen d'une liaison de signalisation (5, 7) qui permet le transfert d'un signal (20) codé en PWM et **en ce que** chaque caméra (3, 4) comporte des moyens de décodage du signal (20) codé en PWM et de récupération d'un signal d'horloge à partir du signal (20) codé en PWM.

3. Système d'enregistrement d'images selon l'une des revendications précédentes, **caractérisé en ce qu'**au moins l'une des caméras (3, 4) comporte un oscillateur et **en ce que** des moyens de synchronisation des caméras sont prévus et récupèrent un signal d'horloge à partir d'un signal codé en PWM formé par le dispositif de réception (2).

4. Système d'enregistrement d'images selon l'une des revendications précédentes, **caractérisé en ce que** chaque caméra (3, 4) est reliée au dispositif de réception (2) par une liaison de signalisation (6, 8) à large bande.

5. Système d'enregistrement d'images selon l'une des revendications précédentes, **caractérisé par** son utilisation dans un véhicule automobile.

6. Procédé de commande d'un système (1) d'enregistrement d'images qui comporte un dispositif de réception (2) et au moins une caméra (3, 4), **caractérisé en ce que** le dispositif de réception (2) forme un signal (20) codé en PWM, **en ce que** le signal (20) est apporté à la caméra (3, 4) par une liaison de signalisation (5, 7) et **en ce qu'**un signal d'horloge est régénéré dans la caméra (3, 4) à partir du signal (20) codé en PWM.

7. Procédé selon la revendication 6, **caractérisé en ce que** le signal d'horloge régénéré à partir du signal (20) codé en PWM est utilisé pour la commande de la caméra (3, 4) et pour la commande du transfert de données entre la caméra (3, 4) et le dispositif de réception (2).

8. Procédé selon l'une des revendications précédentes, **caractérisé en ce qu'**un signal d'horloge est formé dans au moins une caméra (3, 4) et **en ce qu'**un autre signal d'horloge est récupéré à partir du signal (20) codé en PWM dans un but de synchronisation.
